# EUROPEAN PATENT SPECIFICATION

(11) **EP 3 895 876 B1**
(45) Date of publication and mention of the grant of the patent: **06.03.2024**
(21) Application number: 19896651.7
(22) Date of filing: 13.12.2019
(51) Int. Cl.: B29C 48/25, B29C 48/07, B29C 48/21, B29C 48/30, B29C 48/49, B29D 30/20, B29D 30/30

(54) **EXTRUSION SYSTEM AND TIRE BLANK PROCESSING METHOD**
EXTRUSIONSSYSTEM UND VERFAHREN ZUR VERARBEITUNG VON REIFENROHLINGEN
SYSTÈME D'EXTRUSION ET PROCÉDÉ DE TRAITEMENT D'ÉBAUCHE DE PNEU

(30) Priority: 13.12.2018 CN 201811526371
(43) Date of publication of application: 20.10.2021
(73) Proprietor: Mesnac Co. Ltd., Qingdao, Shandong 266042 (CN); Qingdao Mesnac Machinery & Electric Engineering Co., Ltd., Jiaozhou Qingdao, Shandong 266300 (CN)
(72) Inventor: BO, Fuxiu, Qingdao, Shandong 266042 (CN); GONG, Yiqing, Qingdao, Shandong 266042 (CN); LIU, Yonglu, Qingdao, Shandong 266042 (CN); WANG, Jianfa, Qingdao, Shandong 266042 (CN); WU, Yuanxing, Qingdao, Shandong 266042 (CN); LIU, Shuming, Qingdao, Shandong 266042 (CN)
(74) Representative: Winter, Brandl - Partnerschaft mbB
(86) International application number: PCT/CN2019/125347
(87) International publication number: WO 2020/119811

(56) References cited:
- EP-A1- 0 157 103
- EP-A2- 0 201 337
- EP-A2- 1 604 802

## Description

### Technical Field

The present disclosure relates to a technical field of tire manufacturing devices, and in particular to an extrusion system and a method for processing a tire blank.

### Background

Currently, in the related art, a tire is formed by combining a plurality of rubber formulations, and each quantitative extruder extrudes one rubber formulation. During production, a quantitative extruder (machine head) of a rubber formulation is firstly moved forward and backward and leftward and rightward, to align the winding starting position of the drum & the tire blank, then the drum rotates and the extruder quantitatively extrudes the rubber strip and moves forward and backward and leftward and rightward. Finally, the rubber strip is uniformly winded on the drum & the tire blank according to the shape required by the process, so as to complete extrusion and winding of a rubber formulation, then the quantitative extruder returns to the initial position, and the next quantitative extruder repeats the above action.

However, the related art has the following disadvantages:
a. During operation, quantitative extruders of different rubber formulations need to frequently switch positions, which wastes time and reduces production efficiency of the device;
b. The planar layout of the device results in large area occupied.

Document EP 0 201 337 A2 relates to an apparatus for forming an elastomeric strip formed from at least two elastomeric compounds, for example to use as a pneumatic tire tread strip. Extrusion means advance two or more elastomeric materials under pressure toward a final chamber, from which material is extruded between a final die and a roller. Document EP 1 604 802 A2 relates to an apparatus for manufacturing a strip of rubber compounds comprises four extruders and a single extruder head. Document EP 0 157 103 A1 relates to devices for producing flat profile strips from plastic rubber or plastic mixtures of different compositions by extrusion, in particular from green tread strips for pneumatic tires having a two-layer central part and two edge parts which are identical to one another. The device has two first extruders which are arranged above or next to one another at an acute angle and are conveyed after a common extrusion die, and a third extruder which is attached to the extrusion die against the withdrawal direction of the profile strips.

### Summary

In view of this, the present disclosure provides an extrusion system and a method for processing a tire blank, so as to solve the problems in the prior art that the tire blank processing is tedious and the operation is complicated.

In order to solve the above problem, according to one aspect of the present invention, as claimed in the accompanying claims, an extrusion system for processing a tire blank formed by combining a plurality of rubber formulations is provided, including: a base; a moving mechanism mounted on the base and being provided with a mounting frame; an extruder assembly mounted on the mounting frame and including a plurality of extruders, each of the plurality of extruders (31) extruding one rubber formulation; and a main machine head mounted in front of the extruder assembly and being provided with a rubber outlet hole, the rubber outlet hole is in communication with machine heads of the plurality of extruders. The moving mechanism includes a longitudinal moving frame arranged on the base and a transverse moving frame arranged on the longitudinal moving frame, wherein the mounting frame is mounted on the transverse moving frame. After a processing of one rubber material from one of the plurality of extruders is completed, another extruder of the plurality of extruders needing to discharge rubber from the extruder assembly to discharge rubber is selected.

Further, the main machine head includes a main body and a plurality of rubber inlet holes arranged on the main body, the plurality of rubber inlet holes communicate with the plurality of machine heads of the plurality of extruders in one-to-one correspondence, and all of the plurality of rubber inlet holes communicate with the rubber outlet hole.

Further, machine heads of the plurality of extruders are provided with a plurality of first connecting holes, the main body is provided with a plurality of second connecting holes, the plurality of first connecting holes are arranged in one-to-one correspondence with the plurality of second connecting holes, and the first connecting holes and the second connecting holes are connected by threaded fasteners.

Further, the mounting frame includes: a chassis mounted on the moving mechanism; and a plurality of support structures mounted on the chassis, and the plurality of support structures are in one-to-one correspondence with the plurality of extruders so as to respectively support the extruders.

Further, each of the plurality of support structures includes a plurality of stand columns, a first end of each of the plurality of stand columns is connected to a bottom of a corresponding extruder in the plurality of extruders, and a second end of each of the plurality of stand columns is connected to the chassis.

Further, a first end of each of the plurality of stand columns is connected to the corresponding extruder by a threaded fastener, and a second end of each of the plurality of stand columns is connected to the chassis by a threaded fastener.

Further, the machine bodies of two adjacent of the plurality of extruders are offset from each other.

Furthermore, the extrusion system also includes a rotating drum, the tire blank is mounted on the rotating drum, and the rotating drum is used to rotate the tire blank.

According to another aspect of the present disclosure, a method for processing a tire blank, using the above extrusion system, is provided. The method includes: an alignment step: moving an extruder assembly and a main machine head to a position of a tire blank to be processed by a moving mechanism, and a rubber outlet hole is aligned to the position of the tire blank to be processed; a processing step: according to a rubber material needing to be processed, selecting an extruder needing to discharge rubber from the extruder assembly to discharge rubber; a rubber exchanging step: after a processing of one rubber material is completed, according to the rubber material to be processed in a next step, selecting another extruder needing to discharge rubber from the extruder assembly to discharge rubber.

With the technical solution of the present disclosure, since the extrusion system of the present disclosure includes an extruder assembly and a main machine head mounted in front of the extruder assembly, the extruder assembly includes a plurality of extruders, and the main machine head is mounted in front of the extruder assembly, a rubber outlet hole is arranged on the main machine head, and the rubber outlet hole is in communication with the machine heads of the plurality of extruders. When the tire blank is processed, the worker can select an extruder needing to discharge rubber from the extruder assembly to discharge rubber according to the rubber material to be processed. After the processing of one rubber material is completed, another extruder needing to discharge rubber can be selected from the extruder assembly to discharge rubber according to the rubber material to be processed in a next step, and the next working procedure is directly performed. It is unnecessary to repeatedly switch every extruder to the position of the tire blank to be processed to process the tire blank as in the related art, and the operation is simple and the production efficiency is high.

### Brief Description of the Drawings

The accompanying drawings described herein are used to provide a further understanding of the disclosure, and constitute a part of the present application, and the exemplary embodiments of the disclosure and the description thereof are used to explain the disclosure, but do not constitute improper limitations to the disclosure. In the drawings:

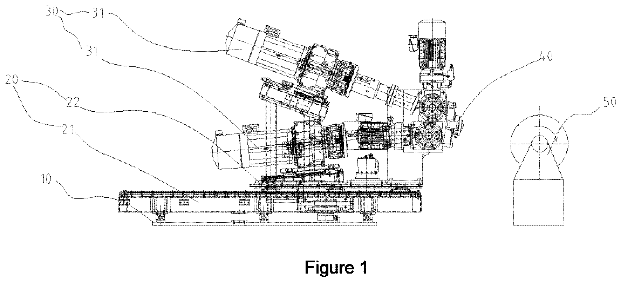

Fig. 1 shows a schematic diagram of an embodiment of the extrusion system of the present disclosure.

The figures include the following reference numbers:
10, base; 20, moving mechanism; 21, longitudinally moving frame; 22, transverse moving frame; 30, extruder assembly; 31, extruder; 40, main machine head; 50, rotating drum.

### Detailed Description of the Embodiments

It is important to note that the embodiments of the present disclosure and the characteristics in the embodiments can be combined under the condition of no conflicts. The present disclosure will be described below with reference to the drawings and embodiments in detail.

As stated in the Background, in the related art, a tire is formed by combining a plurality of rubber formulations, and each quantitative extruder extrudes one rubber formulation. During production, a quantitative extruder (machine head) of a rubber formulation is firstly moved forward and backward and leftward and rightward, to align the winding starting position of the drum & the tire blank, then the drum rotates and the extruder quantitatively extrudes the rubber strip and moves forward and backward and leftward and rightward. Finally, the rubber strip is uniformly winded on the drum & the tire blank according to the shape required by the process, so as to complete extrusion and winding of a rubber formulation, then the quantitative extruder returns to the initial position, and the next quantitative extruder repeats the above action. However, the related art has the following disadvantages: a. during operation, quantitative extruders of different rubber formulations need to frequently switch positions, which wastes time and reduces production efficiency of the device; b. the planar layout of the device results in large area occupied.

With reference to Fig. 1, in order to solve the above problem, according to one aspect of the present disclosure, an extrusion system is provided. The extrusion system includes a base 10, a moving mechanism 20, an extruder assembly 30 and a main machine head 40, wherein the moving mechanism 20 is mounted on the base 10, and a mounting frame is provided on the moving mechanism 20; the extruder assembly 30 is mounted on the mounting frame, and the extruder assembly 30 includes a plurality of extruders 31; the main machine head 40 is mounted in front of the extruder assembly 30, the main machine head 40 is provided with a rubber outlet hole, and the rubber outlet hole is communicated with the machine heads of the plurality of extruders 31. When the tire blank is processed, a worker can select an extruder needing to discharge rubber from the extruder assembly to discharge rubber according to the rubber material to be processed, and after the processing of one rubber material is completed, another extruder needing to discharge rubber can be selected from the extruder assembly to discharge rubber according the rubber material to be processed in the next step, and the next working procedure is directly performed. It is unnecessary to repeatedly switch every extruder to the position of the tire blank to be processed to process the tire blank as in the related art, so that the operation is simple and the production efficiency is high.

In order to enable the rubber inside the plurality of extruders to be extruded onto the tire blank to be processed through a main machine head, the main machine head 40 in the present embodiment includes a main body and a plurality of rubber inlet holes provided on the main body, the plurality of rubber inlet holes are in one-to-one communication with the plurality of machine heads of the plurality of extruders 31, and the plurality of rubber inlet holes are all in communication with the rubber outlet hole. In other embodiments, there is a plurality of rubber outlet holes, and the plurality of rubber outlet holes and the plurality of rubber input holes are arranged in one-to-one correspondence.

In order to detachably mount the main machine head on the extruder assembly, in this embodiment, a plurality of first connecting holes are provided on the machine heads of the plurality of extruders 31, a plurality of second connecting holes are provided on the main body, the plurality of first connecting holes are arranged in one-to-one correspondence with the plurality of second connecting holes, and the plurality of first connecting holes are connected with the plurality of second connecting holes by threaded fasteners. Of course, the main machine head may be connected in other ways, as long as the main machine head can be securely mounted to the extruder assembly.

In order to facilitate the adjustment of the position of the main machine head, the moving mechanism 20 in this embodiment includes a longitudinal moving frame 21 and a transverse moving frame 22, wherein the longitudinal moving frame 21 is arranged on the base 10; the transverse moving frame 22 is arranged on the longitudinal moving frame 21, and the mounting frame is mounted on the transverse moving frame 22. The transverse frame body and the longitudinal frame body are driven by an electric motor or an oil cylinder, a rail is arranged between the bottom of the longitudinal frame body and the base, and a rail is arranged between the bottom of the transverse frame body and the longitudinal frame body, so that front and rear as well as left and right adjustment of the main machine head is realized, and the moving manner of the moving mechanism can also be, for example, the moving manner of the moving system of a machining center.

In order to stably support the extruders, the mounting frame in the present embodiment includes a chassis and a plurality of supporting structures, the chassis is mounted on the moving mechanism 20; the plurality of support structures are mounted on the chassis, and the plurality of support structures are in one-to-one correspondence with the plurality of extruders 31, so as to respectively support the extruders 31.

In order to ensure stability of the support structures, each of the plurality of support structures in this embodiment includes a plurality of stand columns, a first end of each of the plurality of stand columns is connected to a bottom of a corresponding extruder 31 in the plurality of extruders, and a second end of each of the plurality stand columns is connected to the chassis. Preferably, in this embodiment, the first end of each of the plurality stand columns is connected to of the corresponding extruder 31 by a threaded fastener, and the second end of each of the plurality of stand columns is connected to the chassis by a threaded fastener.

In order to reduce the overall volume of the extruder assembly, the machine bodies of two adjacent of the plurality of extruders in this embodiment are offset from each other.

Specifically, the extrusion system in this embodiment also includes a rotating drum 50, and the tire blank is mounted on the rotating drum 50, and the rotating drum 50 is used to rotate the tire blank.

According to another aspect of the present disclosure, a method for processing a tire blank is provided. The method uses the described extrusion system, and the method includes an alignment step, a processing step and a rubber exchanging step, wherein the alignment step includes: moving, by the moving mechanism 20, the extruder assembly 30 and the main machine head 40 to the position of a tire blank to be processed, and the rubber outlet hole is aligned to the position of the tire blank to be processed; the processing step includes: according to a rubber material needing to be processed, selecting an extruder 31 needing to discharge rubber from the extruder assembly 30 to discharge rubber; the rubber exchanging step includes: after the processing of one rubber material is completed, according to the rubber material to be processed in the next step, selecting another extruder 31 needing to discharge rubber from the extruder assembly 30 to discharge rubber. And the next working procedure is directly performed. It is unnecessary to repeatedly switch every extruder to the position of the tire blank to be processed to process the tire blank as in the related art, and the operation is simple and the production efficiency is high.

From the above description, it can be seen that the above embodiments of the present disclosure achieve the following technical effects:
Since the extrusion system of the present disclosure includes an extruder assembly and a main machine head mounted in front of the extruder assembly, the extruder assembly includes a plurality of extruders, the main machine head is mounted in front of the extruder assembly, the main machine head is provided with a rubber outlet hole, and the rubber outlet hole is in communication with the machine heads of the plurality of extruders. When the tire blank is processed, a worker can select an extruder needing to discharge rubber from the extruder assembly according to the rubber material needing to be processed. And after the processing of one rubber material is completed, another extruder needing to discharge rubber can be selected from the extruder assembly to discharge rubber according to the rubber material to be processed in the next step, and the next working procedure is directly performed. It is unnecessary to repeatedly switch every extruder to the position of the tire blank to be processed to process the tire blank as in the related art, and the operation is simple and the production efficiency is high.

The above description is only the preferred embodiments of the present disclosure, and is not intended to limit the present disclosure. For those skilled in the art, the present disclosure may have various modifications and variations. Any modifications, equivalent replacements, improvements and the like made within the principle of the present disclosure shall belong to the protection scope of the present disclosure, which is defined by the appended claims.

## Claims

1. An extrusion system for processing a tire blank formed by combining a plurality of rubber formulations, comprising:
a base (10);
a moving mechanism (20), the moving mechanism (20) being mounted on the base (10), the moving mechanism (20) being provided with a mounting frame;
an extruder assembly (30), the extruder assembly (30) comprising a plurality of extruders (31), each of the plurality of extruders (31) extruding one rubber formulation; and
a main machine head (40), the main machine head (40) being mounted in a front of the extruder assembly (30), the main machine head (40) being provided with a rubber outlet hole, and the rubber outlet hole being in communication with machine heads of the plurality of extruders (31),
**characterized in that**
the extruder assembly (30) is mounted on the mounting frame,
the moving mechanism (20) comprises:
a longitudinal moving frame (21), being arranged on the base (10); and
a transverse moving frame (22), being arranged on the longitudinal moving frame (21), and the mounting frame being mounted on the transverse moving frame (22),
wherein, after a processing of one rubber material from one of the plurality of extruders (31) is completed, another extruder (31) of the plurality of extruders (31) needing to discharge rubber from the extruder assembly (30) is selected to discharge rubber.

2. The extrusion system as claimed in claim 1, wherein the main machine head (40) comprises a main body and a plurality of rubber inlet holes arranged on the main body, wherein the plurality of rubber inlet holes communicate with the plurality of machine heads of the plurality of extruders (31) in one-to-one correspondence, and all of the plurality of rubber inlet holes communicate with the rubber outlet hole.

3. The extrusion system as claimed in claim 2, wherein machine heads of the plurality of extruders (31) are provided with a plurality of first connecting holes, the main body is provided with a plurality of second connecting holes, the plurality of first connecting holes are arranged in one-to-one correspondence with the plurality of second connecting holes, and the first connecting holes and the second connecting holes are connected by threaded fasteners.

4. The extrusion system as claimed in claim 1, wherein the mounting frame comprises:
a chassis mounted on the moving mechanism (20); and
a plurality of support structures, the plurality of support structures being mounted on the chassis, and the plurality of support structures being in one-to-one correspondence with the plurality of extruders (31) to respectively support the extruders (31).

5. The extrusion system as claimed in claim 4, wherein each of the plurality of support structures comprises a plurality of stand columns, a first end of each of the plurality of stand columns is connected to a bottom of a corresponding extruder (31) in the plurality of extruders, and a second end of each of the plurality of stand columns is connected to the chassis.

6. The extrusion system as claimed in claim 5, wherein the first end of the each of the plurality of stand columns is connected to the corresponding extruder (31) by a threaded fastener, and the second end of the each of the plurality of stand columns is connected to the chassis by a threaded fastener.

7. The extrusion system as claimed in claim 1, wherein machine bodies of two adjacent of the plurality of extruders are offset from each other.

8. The extrusion system as claimed in any one of claims 1 to 7, wherein the extrusion system further comprises a rotating drum (50), and a tire blank is mounted on the rotating drum (50), the rotating drum (50) is used to rotate the tire blank.

9. A method for processing a tire blank, **characterized in that** the method for processing the tire blank formed by combining a plurality of rubber formulations uses the extrusion system as claimed in any one of claims 1 to 8, and the method comprises:
an alignment step: moving an extruder assembly (30) and a main machine head (40) to a position of a tire blank to be processed by a moving mechanism (20), wherein a rubber outlet hole is aligned to the position of the tire blank to be processed;
a processing step: according to a rubber material needing to be processed, selecting an extruder (31) needing to discharge rubber from the extruder assembly (30) to discharge rubber;
a rubber exchanging step: after a processing of one rubber material is completed, according to a rubber material to be processed in a next step, selecting another extruder (31) needing to discharge rubber from the extruder assembly (30) to discharge rubber.

## Patentansprüche

1. Extrusionssystem zur Verarbeitung eines Reifenrohlings, der durch Kombination einer Mehrzahl von Gummiformulierungen gebildet wird, mit:
einer Basis (10);
einem beweglichen Mechanismus (20), wobei der bewegliche Mechanismus (20) auf der Basis (10) montiert ist, wobei der bewegliche Mechanismus (20) mit einem Montagerahmen versehen ist;
einer Extrusionsanordnung (30), wobei die Extrusionsanordnung (30) eine Mehrzahl von Strangpressen (31) aufweist, wobei jede der Mehrzahl von Strangpressen (31) eine Gummiformulierung extrudiert; und
einem Hauptmaschinenkopf (40), wobei der Hauptmaschinenkopf (40) an einer Vorderseite der Extrusionsanordnung (30) angebracht ist, wobei der Hauptmaschinenkopf (40) mit einem Gummiaustrittsloch versehen ist und das Gummiaustrittsloch in Verbindung mit Maschinenköpfen der Mehrzahl von Strangpressen (31) steht,
**dadurch gekennzeichnet, dass**
die Extrusionsanordnung (30) auf dem Montagerahmen montiert ist,
der bewegliche Mechanismus (20)
einen längsbeweglichen Rahmen (21), der auf der Basis (10) angeordnet ist; und
einen querbeweglichen Rahmen (22) aufweist, der auf dem längsbeweglichen Rahmen (21) angeordnet ist, wobei der Montagerahmen auf dem querbeweglichen Rahmen (22) montiert ist,
wobei, nachdem eine Verarbeitung eines Gummimaterials aus einer der Mehrzahl von Strangpressen (31) abgeschlossen ist, eine andere Strangpresse (31) der Mehrzahl von Strangpressen (31), die Gummi aus der Extrusionsanordnung (30) abführen muss, ausgewählt wird, um Gummi abzuführen.

2. Extrusionssystem nach Anspruch 1, wobei der Hauptmaschinenkopf (40) einen Hauptkörper und eine Mehrzahl von Gummieintrittslöchern aufweist, die auf dem Hauptkörper angeordnet sind, wobei die Mehrzahl von Gummieintrittslöchern mit der Mehrzahl von Maschinenköpfen der Mehrzahl von Strangpressen (31) in eins-zu-eins-Beziehung kommunizieren und alle der Mehrzahl von Gummieintrittslöchern mit dem Gummiaustrittsloch kommunizieren.

3. Extrusionssystem nach Anspruch 2, wobei die Maschinenköpfe der Mehrzahl von Strangpressen (31) mit einer Mehrzahl von ersten Verbindungslöchern versehen sind, der Hauptkörper mit einer Mehrzahl von zweiten Verbindungslöchern versehen ist, die Mehrzahl von ersten Verbindungslöchern in eins-zu-eins-Entsprechung mit der Mehrzahl von zweiten Verbindungslöchern angeordnet sind, und die ersten Verbindungslöcher und die zweiten Verbindungslöcher durch Gewindebefestigungen verbunden sind.

4. Extrusionssystem nach Anspruch 1, wobei der Montagerahmen Folgendes aufweist:
ein auf dem beweglichen Mechanismus (20) montiertes Fahrgestell; und
eine Mehrzahl von Stützstrukturen, wobei die Mehrzahl von Stützstrukturen auf dem Fahrgestell montiert ist und die Mehrzahl von Stützstrukturen in eins-zu-eins Entsprechung mit der Mehrzahl von Strangpressen (31) steht, um die Strangpressen (31) zu stützen.

5. Extrusionssystem nach Anspruch 4, wobei jede der Mehrzahl von Stützstrukturen eine Mehrzahl von Stativsäulen aufweist, ein erstes Ende jeder der Mehrzahl von Stativsäulen mit einem Boden einer entsprechenden Strangpresse (31) in der Mehrzahl von Strangpressen verbunden ist und ein zweites Ende jeder der Mehrzahl von Stativsäulen mit dem Fahrgestell verbunden ist.

6. Extrusionssystem nach Anspruch 5, wobei das erste Ende jeder der Mehrzahl von Stativsäulen mit der entsprechenden Strangpresse (31) durch eine Gewindebefestigung verbunden ist und das zweite Ende jeder der Mehrzahl von Stativsäulen mit dem Fahrgestell durch eine Gewindebefestigung verbunden ist.

7. Extrusionssystem nach Anspruch 1, wobei die Maschinenkörper von zwei benachbarten der Mehrzahl von Strangpressen gegeneinander versetzt sind.

8. Extrusionssystem nach einem der Ansprüche 1 bis 7, wobei das Extrusionssystem ferner eine Drehwalze (50) aufweist und ein Reifenrohling auf der Drehwalze (50) montiert ist, wobei die Drehwalze (50) zum Drehen des Reifenrohlings verwendet wird.

9. Verfahren zum Verarbeiten eines Reifenrohlings, **dadurch gekennzeichnet, dass** das Verfahren zum Verarbeiten des Reifenrohlings, der durch Kombinieren einer Mehrzahl von Gummiformulierungen gebildet wird, das Extrusionssystem nach einem der Ansprüche 1 bis 8 verwendet, und das Verfahren Folgendes aufweist:
einen Ausrichtungsschritt: Bewegen einer Extrusionsanordnung (30) und eines Hauptmaschinenkopfes (40) zu einer Position eines Reifenrohlings, der von einem beweglichen Mechanismus (20) verarbeitet werden soll, wobei ein Gummiaustrittsloch auf die Position des zu verarbeitenden Reifenrohlings ausgerichtet wird;
einen Verarbeitungsschritt: entsprechend einem zu verarbeitenden Gummimaterial, Auswählen einer Strangpresse (31), die Gummi aus der Extrusionsanordnung (30) abführen muss, um Gummi abzuführen;
einen Gummiaustauschschritt: nach Abschluss der Verarbeitung eines Gummimaterials, entsprechend dem in einem nächsten Schritt zu verarbeitenden Gummimaterial, Auswählen einer anderen Strangpresse (31), die Gummi aus der Extrusionsanordnung (30) abführen muss, um Gummi abzuführen.

## Revendications

1. Système d'extrusion pour traiter une ébauche de pneumatique formée en combinant une pluralité de formulations de caoutchouc, comprenant :
une base (10) ;
un mécanisme mobile (20), le mécanisme mobile (20) étant monté sur la base (10), le mécanisme mobile (20) étant pourvu d'un cadre de montage ;
un ensemble extrudeuse (30), l'ensemble extrudeuse (30) comprenant une pluralité d'extrudeuses (31), chacune de la pluralité d'extrudeuses (31) extrudant une formulation de caoutchouc ; et
une tête de machine principale (40), la tête de machine principale (40) étant montée à l'avant de l'ensemble extrudeuse (30), la tête de machine principale (40) étant dotée d'un trou de sortie de caoutchouc, et le trou de sortie de caoutchouc étant en communication avec les têtes de machine de la pluralité d'extrudeuses (31),
**caractérisé en ce que**
l'ensemble extrudeuse (30) est monté sur le cadre de montage,
le mécanisme mobile (20) comprend :
un cadre mobile longitudinal (21), disposé sur la base (10) ; et
un cadre mobile transversal (22), disposé sur le cadre mobile longitudinal (21), et le cadre de montage étant monté sur le cadre mobile transversal (22),
dans lequel, après qu'un traitement d'un matériau en caoutchouc provenant d'une de la pluralité d'extrudeuses (31) est terminé, une autre extrudeuse (31) de la pluralité d'extrudeuses (31) devant évacuer le caoutchouc de l'ensemble extrudeuse (30) est sélectionnée pour évacuer le caoutchouc.

2. Système d'extrusion selon la revendication 1, dans lequel la tête de machine principale (40) comprend un corps principal et une pluralité de trous d'entrée de caoutchouc disposés sur le corps principal, dans lequel la pluralité de trous d'entrée de caoutchouc communique avec la pluralité de têtes de machine de la pluralité d'extrudeuses (31) en correspondance biunivoque, et la totalité de la pluralité de trous d'entrée de caoutchouc communique avec le trou de sortie de caoutchouc.

3. Système d'extrusion selon la revendication 2, dans lequel des têtes de machine de la pluralité d'extrudeuses (31) sont dotées d'une pluralité de premiers trous de liaison, le corps principal est doté d'une pluralité de seconds trous de liaison, la pluralité de premiers trous de liaison est disposée en correspondance biunivoque avec la pluralité de seconds trous de liaison, et les premiers trous de liaison et les seconds trous de liaison sont reliés par des attaches filetées.

4. Système d'extrusion selon la revendication 1, dans lequel le cadre de montage comprend :
un châssis monté sur le mécanisme mobile (20) ; et
une pluralité de structures de support, la pluralité de structures de support étant montée sur le châssis, et la pluralité de structures de support étant en correspondance biunivoque avec la pluralité d'extrudeuses (31) pour supporter respectivement les extrudeuses (31).

5. Système d'extrusion selon la revendication 4, dans lequel chacune de la pluralité de structures de support comprend une pluralité de colonnes de support, une première extrémité de chacune de la pluralité de colonnes de support est reliée à un fond d'une extrudeuse correspondante (31) dans la pluralité d'extrudeuses, et une seconde extrémité de chacune de la pluralité de colonnes de support est reliée au châssis.

6. Système d'extrusion selon la revendication 5, dans lequel la première extrémité de la chacune de la pluralité de colonnes de support est reliée à l'extrudeuse correspondante (31) par une attache filetée, et la seconde extrémité de la chacune de la pluralité de colonnes de support est reliée au châssis par une attache filetée.

7. Système d'extrusion selon la revendication 1, dans lequel des corps de machine de deux extrudeuses adjacentes parmi la pluralité d'extrudeuses sont décalés l'un par rapport à l'autre.

8. Système d'extrusion selon l'une quelconque des revendications 1 à 7, dans lequel le système d'extrusion comprend en outre un tambour rotatif (50), et une ébauche de pneumatique est montée sur le tambour rotatif (50), le tambour rotatif (50) est utilisé pour faire tourner l'ébauche de pneumatique.

9. Procédé de traitement d'une ébauche de pneumatique, **caractérisé en ce que** le procédé de traitement de l'ébauche de pneumatique formée en combinant une pluralité de formulations de caoutchouc utilise le système d'extrusion selon l'une quelconque des revendications 1 à 8, et le procédé comprend :
une étape d'alignement : déplacer un ensemble extrudeuse (30) et une tête de machine principale (40) vers une position d'une ébauche de pneumatique à traiter par un mécanisme mobile (20), dans lequel un trou de sortie de caoutchouc est aligné sur la position de l'ébauche de pneumatique à traiter ;
une étape de traitement : en fonction d'un matériau en caoutchouc devant être traité, sélectionner une extrudeuse (31) devant évacuer le caoutchouc de l'ensemble extrudeuse (30) pour évacuer le caoutchouc ;
une étape d'échange de caoutchouc : une fois un traitement d'un matériau en caoutchouc terminé, en fonction d'un matériau en caoutchouc à traiter dans une étape suivante, sélectionner une autre extrudeuse (31) devant évacuer le caoutchouc de l'ensemble extrudeuse (30) pour évacuer le caoutchouc.
